# EUROPEAN PATENT APPLICATION

(11) **EP 4 580 240 A1**
(43) Date of publication of application: **02.07.2025**
(21) Application number: 22955988.5
(22) Date of filing: 23.08.2022
(51) Int. Cl.: H04W 24/00

(54) **METHOD FOR SENDING MEASUREMENT CONFIGURATION INFORMATION, METHOD FOR RECEIVING MEASUREMENT CONFIGURATION INFORMATION, AND APPARATUS**

(71) Applicant: Beijing Xiaomi Mobile Software Co., Ltd., Beijing 100085 (CN)
(72) Inventor: TAO, Xuhua, Beijing 100085 (CN)
(74) Representative: Dehns Germany Partnerschaft mbB
(86) International application number: PCT/CN2022/114302
(87) International publication number: WO 2024/040439

(57) **Abstract**

Provided in the present disclosure are a method for sending measurement configuration information, a method for receiving measurement configuration information, and an apparatus. The method for receiving measurement configuration information comprises: receiving measurement configuration information sent by a network device, wherein the measurement configuration information comprises a first measurement gap and a second measurement gap; and executing measurement by using at least one of the first measurement gap and the second measurement gap according to the capability of a user equipment, wherein a time-domain resource of the first measurement gap overlaps with a time-domain resource of the second measurement gap. In the method of the present disclosure, when there is a conflict between time-domain resources of a plurality of measurement gaps configured by the network device for the user equipment, the user equipment may perform adaptive processing in view of the capability of the user equipment itself, and perform measurement by using one or more measurement gaps, thereby realizing effective measurement in this measurement gap conflict scenario.

## Description

### TECHNICAL FIELD

The present disclosure relates to the field of wireless communication technology, and in particular to a method and apparatus for sending and receiving measurement configuration information.

### BACKGROUND

In a wireless communication system, the user equipment (UE) needs to perform mobility measurements on neighboring cell signals to be measured that are configured by the network device. The UE reports the measurement results of the mobility measurement to the network device, and the network device determines the current communication status of the UE based on the measurement results to facilitate mobility management of the UE. When measuring neighboring cell signals, the UE needs to suspend data transmission with the serving cell and resume communication with the serving cell after the measurement is completed. The time interval during which the UE suspends communication with the serving cell to measure neighboring cell signals is called the Measurement Gap (MG).

In 5G new radio (NR), three types of MGs are introduced, such as concurrent measurement gap (or referred to as legacy gap), pre-configured measurement gap (Pre-MG) and network controlled small gap (NCSG).

It is necessary to solve the conflict problem when the network device configures more than one type of measurement gap for the UE.

### SUMMARY

The present disclosure provides a method and apparatus for sending and receiving measurement configuration information.

In a first aspect, the present disclosure provides a method for receiving measurement configuration information, which is performed by a user equipment, and the method includes:
receiving measurement configuration information sent by a network device, wherein the measurement configuration information includes a first measurement gap and a second measurement gap; and
performing measurement using at least one of the first measurement gap and the second measurement gap according to a user equipment capability, wherein a time domain resource of the first measurement gap is overlapped with a time domain resource of the second measurement gap.

In some possible implementations, the time domain resource of the first measurement gap being overlapped with the time domain resource of the second measurement gap, includes:
a time domain resource of a radio frequency retuning zone in the first measurement gap is overlapped with a time domain resource of a measurement zone in the second measurement gap, and a time domain resource of a measurement zone in the first measurement gap is not overlapped with a time domain resource of a radio frequency retuning zone in the second measurement gap.

In some possible implementations, the performing measurement using at least one of the first measurement gap and the second measurement gap according to the user equipment capability includes:
performing measurement using the second measurement gap when the user equipment capability includes supporting a first capability.

In some possible implementations, the performing measurement using at least one of the first measurement gap and the second measurement gap according to the user equipment capability includes:
performing measurement using the first measurement gap when the user equipment capability includes not supporting a first capability.

In some possible implementations, the performing measurement using at least one of the first measurement gap information and the second measurement gap according to the user equipment capability includes:
performing measurement on a first carrier configured by the measurement configuration information using the first measurement gap and performing measurement on a second carrier configured by the measurement configuration information, when the user equipment capability includes supporting a first capability and a second capability.

In some possible implementations, the time domain resource of the first measurement gap being overlapped with the time domain resource of the second measurement gap, includes:
at least one time domain resource of a measurement zone in the first measurement gap is overlapped with a time domain resource of a measurement zone in the second measurement gap.

In some possible implementations, the performing measurement using at least one of the first measurement gap information and the second measurement gap according to the user equipment capability includes:
performing measurement on a first carrier configured by the measurement configuration information using the first measurement gap and performing measurement on a second carrier configured by the measurement configuration information, when the user equipment capability includes supporting a second capability.

In some possible implementations, the performing measurement using at least one of the first measurement gap and the second measurement gap according to the user equipment capability includes:
performing measurement using the first measurement gap or the second measurement gap with a higher priority when the user equipment capability includes not supporting a second capability.

In some possible implementations, the time domain resource of the first measurement gap being overlapped with the time domain resource of the second measurement gap, includes:
a time domain resource of a radio frequency retuning zone in the first measurement gap is overlapped with a time domain resource of a measurement zone in the second measurement gap, and a time domain resource of a measurement zone in the first measurement gap is overlapped with a time domain resource of a radio frequency retuning zone in the second measurement gap.

In some possible implementations, the performing measurement by using at least one of the first measurement gap and the second measurement gap according to the user equipment capability includes:
performing measurement using the first measurement gap or the second measurement gap with a higher priority when the user equipment capability includes supporting a first capability.

In some possible implementations, the performing measurement by using at least one of the first measurement gap and the second measurement gap according to the user equipment capability includes:
performing measurement using the first measurement gap or the second measurement gap with a higher priority when the user equipment capability includes supporting a second capability.

In some possible implementations, the performing measurement using at least one of the first measurement gap and the second measurement gap according to the user equipment capability includes:
performing measurement on a first carrier configured by the measurement configuration information using the first measurement gap and performing measurement on a second carrier configured by the measurement configuration information, when the user equipment capability includes supporting a first capability and a second capability.

In some possible implementations, the first measurement gap is a concurrent measurement gap or a preconfigured measurement gap, and the second measurement gap is a network-controlled small measurement gap NCSG.

In some possible implementations, the method further includes:
sending indication information to a network device, wherein the indication information is used to indicate the user equipment capability.

In some possible implementations, the measurement configuration information further includes a priority identifier corresponding to the first measurement gap and a priority identifier corresponding to the second measurement gap.

In a second aspect, the present disclosure provides a method for sending measurement configuration information, which is performed by a network device, and the method includes:
sending measurement gap configuration information to a user equipment, wherein the measurement configuration information includes a first measurement gap and a second measurement gap.

In some possible implementations, the method further includes:
receiving indication information sent by the user equipment, where the indication information is used to indicate a user equipment capability;
wherein the user equipment capability includes whether supporting a first capability, and/or the user equipment capability includes whether supporting a second capability.

In a third aspect, the present disclosure provides a user equipment. The user equipment includes a transceiver module and a processing module coupled to each other, wherein the transceiver module can be used to support a communication apparatus to communicate, and the processing module can be used for the communication apparatus to perform processing operations, such as generating information/messages to be sent, or processing received signals to obtain information/messages.

When executing the steps described in the first aspect above, the transceiver module is configured to receive measurement configuration information sent by a network device, wherein the measurement configuration information includes a first measurement gap and a second measurement gap. The processing module is configured to perform measurement using at least one of the first measurement gap and the second measurement gap according to a user equipment capability, wherein a time domain resource of the first measurement gap is overlapped with a time domain resource of the second measurement gap.

In a fourth aspect, the present disclosure provides a network device, which includes a transceiver module, wherein the transceiver module can be used to support a communication apparatus to perform communication.

When executing the steps described in the second aspect above, the transceiver module is configured to send measurement gap configuration information to a user equipment, wherein the measurement configuration information includes a first measurement gap and a second measurement gap.

In a fifth aspect, the present disclosure provides a communication apparatus, including a processor and a memory; the memory is used to store a computer program; and the processor is used to execute the computer program to implement the first aspect or any possible design of the first aspect.

In a sixth aspect, the present disclosure provides a communication apparatus, including a processor and a memory; the memory is used to store a computer program; and the processor is used to execute the computer program to implement the second aspect or any possible design of the second aspect.

In the seventh aspect, the present disclosure provides a computer-readable storage medium, which stores instructions (or referred to as a computer program, a program), which, when called and executed on a computer, enable the computer to execute the above-mentioned first aspect or any possible design of the first aspect.

In an eighth aspect, the present disclosure provides a computer-readable storage medium, which stores instructions (or referred to as a computer program, a program), which, when called and executed on a computer, enable the computer to execute the above-mentioned second aspect or any possible design of the second aspect.

In a ninth aspect, the present disclosure provides a communication system, including a user device for executing any one of the above methods and a network device for executing any one of the above methods.

In the method disclosed herein, when there is a conflict in the time domain resource of multiple measurement gaps configured by the network device for the user equipment, the user equipment can perform adaptive processing based on its own capability and use one or more measurement gaps for measurement to achieve effective measurement in the scenario of this measurement gap conflict.

It is to be understood that both the foregoing general description and the following detailed description are exemplary and explanatory only and are not restrictive of the present disclosure.

### BRIEF DESCRIPTION OF THE DRAWINGS

The drawings described herein are used to provide a further understanding of the embodiments of the present disclosure and constitute a part of this application. The illustrative embodiments of the embodiments of the present disclosure and their descriptions are used to explain the embodiments of the present disclosure and do not constitute an improper limitation on the embodiments of the present disclosure. In the drawings:

The accompanying drawings herein are incorporated in and constitute a part of the specification, illustrate embodiments consistent with the embodiments of the present disclosure, and together with the description, serve to explain the principles of the embodiments of the present disclosure.
FIG. 1 is a schematic diagram of a wireless communication system architecture provided by an embodiment of the present disclosure;
FIG. 2 is a flow chart of a method for sending and receiving measurement configuration information provided by an embodiment of the present disclosure;
FIG. 3 is a schematic diagram of the structure of concurrent or pre-configured measurement gaps provided by an embodiment of the present disclosure;
FIG. 4 is a schematic diagram of the structure of the NCSG measurement gap provided by an embodiment of the present disclosure;
FIG. 5 is a schematic diagram of a first overlapping scenario provided by an embodiment of the present disclosure;
FIG. 6 is a schematic diagram of a first overlapping scenario provided by another embodiment of the present disclosure;
FIG. 7 is a schematic diagram of a second overlapping scenario provided by an embodiment of the present disclosure;
FIG. 8 is a schematic diagram of a third overlapping scenario provided by an embodiment of the present disclosure;
FIG. 9 is a flow chart of a method for sending and receiving capability information provided by an embodiment of the present disclosure;
FIG. 10 is a schematic diagram of an apparatus for receiving measurement configuration information provided by an embodiment of the present disclosure; and
FIG. 11 is a schematic diagram of an apparatus for sending measurement configuration information provided by an embodiment of the present disclosure.

### DETAILED DESCRIPTION

The embodiments of the present disclosure are now further described in conjunction with the accompanying drawings and specific implementations.

Exemplary embodiments will be described in detail herein, examples of which are shown in the accompanying drawings. When the following description refers to the drawings, the same numbers in different drawings represent the same or similar elements unless otherwise indicated. The implementations described in the following exemplary embodiments do not represent all implementations consistent with the embodiments of the present disclosure. Instead, they are merely examples of apparatus and methods consistent with some aspects of the present disclosure as detailed in the appended claims.

The terms used in the disclosed embodiments are only for the purpose of describing specific embodiments and are not intended to limit the disclosed embodiments. The singular forms of "a", "an" and "the" used in the disclosed embodiments and the appended claims are also intended to include plural forms unless the context clearly indicates other meanings. It should also be understood that the term "and/or" used herein refers to and includes any or all possible combinations of one or more associated listed items.

It should be understood that although the terms first, second, third, etc. may be used to describe various information in the disclosed embodiments, which should not be limited to these terms. These terms are only used to distinguish the same type of information from each other. For example, without departing from the scope of the disclosed embodiments, the first information may also be referred to as the second information, and similarly, the second information may also be referred to as the first information. Depending on the context, the words "if" and "in case" as used herein may be interpreted as "while" or "when" or "in response to determination".

The embodiments of the present disclosure are described in detail below, and examples of the embodiments are shown in the accompanying drawings, wherein the same or similar reference numerals throughout represent the same or similar elements. The embodiments described below with reference to the accompanying drawings are exemplary and are intended to be used to explain the present disclosure, and cannot be understood as limiting the present disclosure.

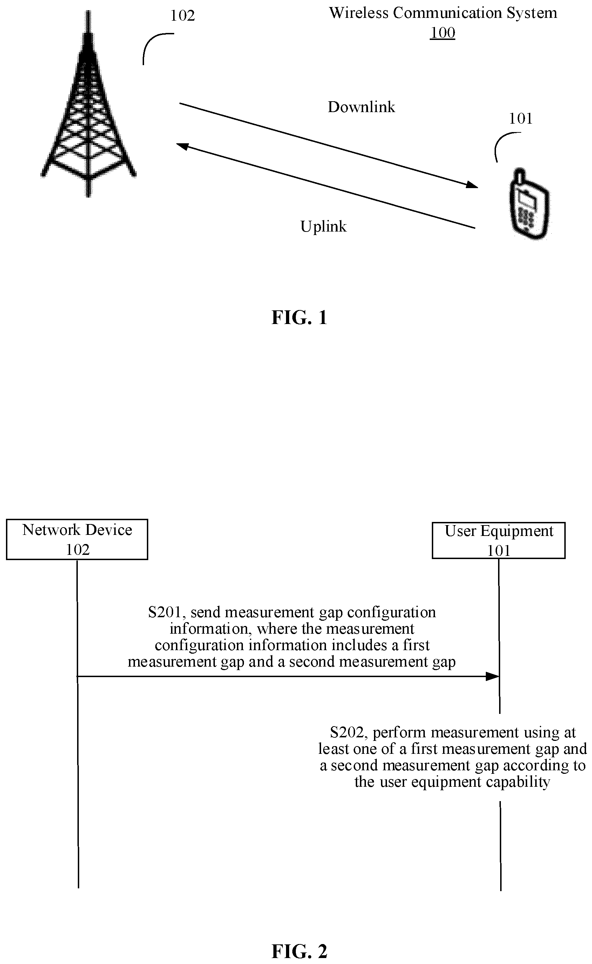

As shown in FIG. 1, a method for sending and receiving measurement configuration information provided by an embodiment of the present disclosure may be applied to a wireless communication system 100, which may include a user equipment 101 and a network device 102. The user equipment 101 is configured to support carrier aggregation and may be connected to multiple carrier components of the network device 102, including a primary carrier component and one or more secondary carrier components.

It should be understood that the above wireless communication system 100 can be applied to both low-frequency scenarios and high-frequency scenarios. The application scenarios of the wireless communication system 100 include, but are not limited to, long term evolution (LTE) system, LTE frequency division duplex (FDD) system, LTE time division duplex (TDD) system, worldwide interoperability for micro wave access (WiMAX) communication system, cloud radio access network (CRAN) system, future fifth-generation (5G) system, new radio (NR) communication system or future evolved public land mobile network (PLMN) system, etc.

The user equipment 101 shown above may be a terminal, an access terminal, a terminal unit, a terminal station, a mobile station (MS), a remote station, a remote terminal, a mobile terminal, a wireless communication device, a terminal agent or a terminal device, etc. The user equipment 101 may have a wireless transceiver function, and it can communicate with one or more network devices of one or more communication systems (such as wireless communication) and receive network services provided by the network devices, and the network devices here include but are not limited to the illustrated network device 102.

The user equipment 101 can be a cellular phone, a cordless phone, a session initiation protocol (SIP) phone, a wireless local loop (WLL) station, a personal digital assistant (PDA) device, a handheld device with wireless communication function, a computing device or other processing device connected to a wireless modem, a vehicle-mounted device, a wearable device, a terminal device in a future 5G network, or a terminal device in a future evolved PLMN network, etc.

The network device 102 may be an access network device (or access network point). The access network device refers to a device that provides network access functions, such as a radio access network (RAN) base station, etc. The network device 102 may specifically include a base station (BS), or a base station and a wireless resource management device for controlling the base station, etc. The network device 102 may also include a relay station (relay device), an access point, a base station in a future 5G network, a base station in a future evolved PLMN network, or an NR base station, etc. The network device 102 may be a wearable device or a vehicle-mounted device. The network device 102 may also be a communication chip with a communication module.

For example, the network device 102 includes, but is not limited to: a next-generation base station (gnodeB, gNB) in 5G, an evolved node B (eNB) in an LTE system, a radio network controller (RNC), a node B (NB) in a WCDMA system, a wireless controller under a CRAN system, a base station controller (BSC), a base transceiver station (BTS) in a GSM system or a CDMA system, a home base station (for example, home evolved nodeB, or home node B, HNB), a baseband unit (BBU), a transmitting and receiving point (TRP), a transmitting point (TP) or a mobile switching center, etc.

The embodiment of the present disclosure provides a method for sending and receiving measurement configuration information. FIG. 2 is a flow chart of a method for sending and receiving measurement configuration information according to an exemplary embodiment. As shown in FIG. 2, the method includes steps S201 to S202, specifically:

Step S201: The network device 102 sends measurement gap configuration information to the user equipment 101, where the measurement configuration information includes a first measurement gap and a second measurement gap.

In some possible implementations, the network device 102 configures the first measurement gap and the second measurement gap through radio resource control (RRC) signaling.

In an example, the network device 102 configures the first measurement gap and the second measurement gap through the RRC signaling IE MeasGapConfig.

In some possible implementations, the measurement configuration information sent by the network device 102 also configures the following corresponding to each measurement gap: measurement object (MO), measurement gap length (MGL), starting offset value, and measurement gap repetition period (MGRP), etc.

In some possible implementations, the measurement configuration information further includes a priority identifier corresponding to the first measurement gap and a priority identifier corresponding to the second measurement gap.

In an example, the priority identifier corresponding to the first measurement gap and the priority identifier corresponding to the second measurement gap may occupy 1 bit of information respectively.

In some possible implementations, the first measurement gap may be one of a concurrent measurement gap (or referred to as a legacy gap), a pre-configured measurement gap (Pre-MG), and a network controlled small gap (NCSG). The second measurement gap is another one of the above three measurement gaps, that is, the first measurement gap and the second measurement gap are of different types.

In an example, the first measurement gap is a concurrent measurement gap or a preconfigured measurement gap, and the second measurement gap is an NCSG.

In some possible implementations, in the concurrent measurement gap, the network device 102 may simultaneously configure 2 sets of measurement gaps for the user equipment 101 in units of each user equipment (per-UE); and in units of each frequency band (per-FR), the network device 102 may simultaneously configure up to 3 sets of measurement gaps for the user equipment 101, for example, configuring 2 sets of measurement gaps for the UE in the FR 1 frequency band and configuring 1 set of measurement gaps in the FR 2 frequency band. It can be understood that measurement gaps in different frequency bands will not cause conflicts in time domain resources.

In some possible implementations, in the preconfigured measurement gap, two states of the measurement gap are defined: activated and deactivated. The network device 102 may change the activation and deactivation states of the Pre-MG through signaling such as RRC signaling, or the user equipment 101 may autonomously determine dynamic activation and deactivation of the Pre-MG.

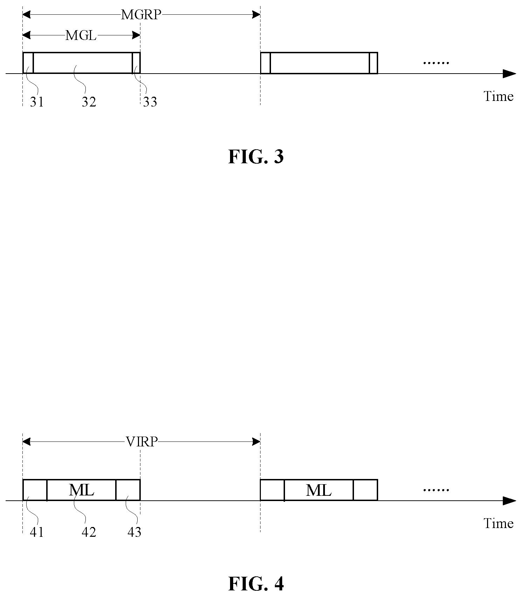

In one example, FIG. 3 illustrates the structure of a concurrent measurement gap or a preconfigured measurement gap. As shown in FIG. 3, in a concurrent measurement gap or a preconfigured measurement gap, a measurement gap may include: a first RF retuning zone 31, a measurement zone 32, and a second RF retuning zone 33, and the MGL of the measurement gap includes the total duration of these three parts. In the first RF retuning zone 31, the user equipment 101 may switch from the serving cell frequency to the frequency of the neighboring cell to be measured or the carrier to be measured; in the measurement zone 32, the user equipment 101 performs a radio resource management (RRM) measurement of the neighboring cell to be measured or the carrier to be measured; in the second RF retuning zone 33, the user equipment 101 may switch from the frequency of the neighboring cell to be measured or the carrier to be measured back to the serving cell frequency. In the measurement zone 32, the user equipment 101 interrupts data transmission with the serving cell.

In some possible implementations, in NCSG, for a user equipment 101 having an idle receiving chain (Rx chain), the network device 102 may reduce the duration of interruption of data transmission between the user equipment 101 and the serving cell by configuring NCSG.

In one example, FIG. 4 illustrates the structure of the NCSG. As shown in FIG. 4, an NCSG may include a first visible interruption length (VIL) 41, a measurement period length (ML) 42, and a second VIL 43, and the repetition period of the measurement gap in the NCSG is VIRP. The user equipment 101 may perform RF retuning in the first VIL41 and the second VIL43, that is, switching from the service cell frequency to the frequency of the neighboring cell to be measured or the carrier to be measured in the first VIL41, and switching from the frequency of the neighboring cell to be measured or the carrier to be measured back to the service cell frequency in the second VIL43. In ML42, the user equipment 101 performs RRM measurement of the neighboring cell to be measured or the carrier to be measured, and still transmits data with the service cell.

In some possible implementations, during the RRM measurement process, the user equipment 101 measures a reference signal (RS) of a neighboring cell to be measured or a carrier to be measured.

In one example, the reference signal is one of the following: synchronization signal block (SSB), downlink channel state information reference signal (CSI-RS), positioning reference signal (PRS), LTE cell reference signal (CRS).

In an example, the user equipment 101 may measure a received signal strength indication (RSSI), a reference signal received power (RSRP), or a reference signal received quality (RSRQ) of the RS.

Step S202: The user equipment 101 receives measurement configuration information, and performs measurement using at least one of a first measurement gap and a second measurement gap according to the user equipment capability, wherein time domain resources of the first measurement gap overlap with time domain resources of the second measurement gap.

In some possible implementations, the user equipment capability includes: whether to support the first capability, and/or whether to support the second capability. The first capability is: the ability of the user equipment 101 to overcome the interference caused by the radio frequency retuning when the time domain resources of the measurement gaps overlap each other. The second capability is: the ability of the user equipment 101 to simultaneously receive the reference signals of at least two cells to be measured when the time domain resources of the measurement gaps overlap each other. The subcarrier spacing (SCS) of at least two cells to be measured is the same or different.

In one example, the user equipment capability is to support only the first capability, that is, the user equipment 101 can overcome the interference caused by the radio frequency retuning during the measurement gap, such as processing the interference caused by the radio frequency retuning, but cannot simultaneously receive the reference signals of at least two cells to be measured during the measurement gap.

In an example, the user equipment capability is to support only the second capability, that is, the user equipment 101 can simultaneously receive reference signals of at least two cells to be measured during the measurement gap, but cannot process interference caused by radio frequency retuning during the measurement gap.

In an example, the user equipment capability is to support the first capability and the second capability, that is, the user equipment 101 can process interference caused by radio frequency retuning during the measurement gap, and can simultaneously receive reference signals of at least two cells to be measured during the measurement gap.

In one example, the user equipment capability is to support neither the first capability nor the second capability, that is, the user equipment 101 can neither process the interference caused by the radio frequency retuning during the measurement gap, nor simultaneously receive the reference signals of at least two cells to be measured during the measurement gap.

In some possible implementations, the time domain resources of the first measurement gap overlapping with the time domain resources of the second measurement gap, includes: the time domain resources of the RF retuning zone in the first measurement gap overlap with the time domain resources of the measurement zone in the second measurement gap, and the time domain resources of the measurement zone in the first measurement gap do not overlap with the time domain resources of the RF retuning zone in the second measurement gap.

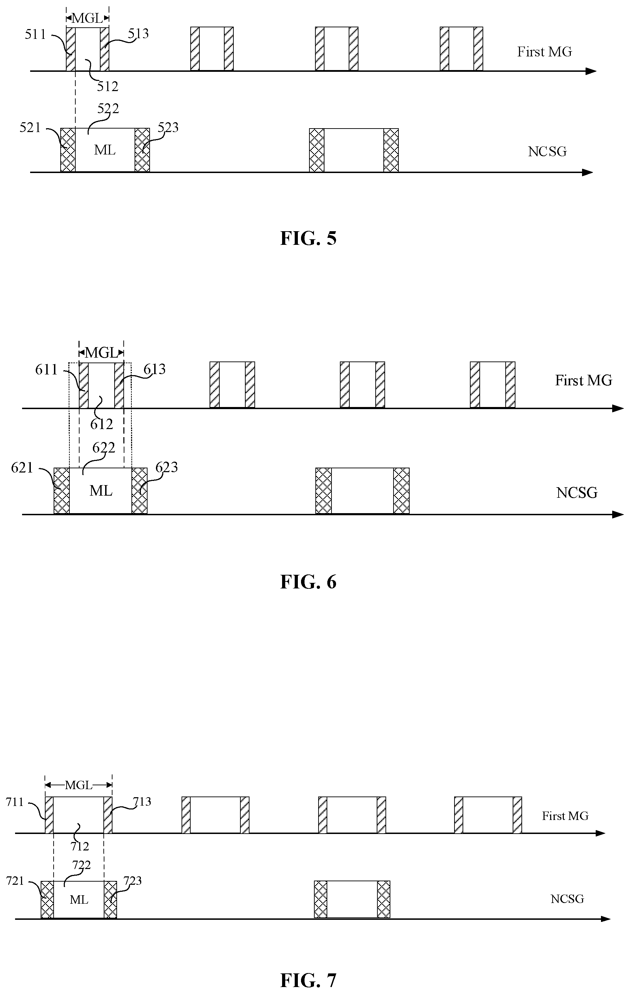

At this time, when the UE re-adjusts the radio frequency in the first measurement gap, it will interfere with the measurement during the second measurement gap. Still taking the first measurement gap as a concurrent measurement gap or a pre-configured measurement gap, and the second measurement gap as an NCSG as an example, reference is made to the description of the following FIGS. 5 and 6, in which the VIL of the NCSG is regarded as the radio frequency retuning zone of the NCSG, and the ML of the NCSG is regarded as the measurement zone of the NCSG.

FIG. 5 is a schematic diagram of a first overlapping scenario according to an exemplary embodiment of the present disclosure. As shown in FIG. 5, the first measurement gap includes a first radio frequency retuning zone 511, a measurement zone 512, and a second radio frequency retuning zone 513, and the MGL may be 4 ms. The second measurement gap includes a first VIL 521, an ML 522, and a second VIL 523. In FIG. 5, the time domain resources of the second radio frequency retuning zone 513 of the first measurement gap overlap with the time domain resources of the measurement zone in the second measurement gap, i.e., ML 522, while the first VIL 521 and the second VIL 523 in the second measurement gap do not overlap with the measurement zone 512 of the first measurement gap. In this case, the radio frequency retuning in the first measurement gap interferes with the measurement during the second measurement gap, so whether the user equipment capability supports the first capability will affect the actual measurement process.

FIG. 6 is a first overlapping scenario shown according to another exemplary embodiment of the present disclosure. As shown in FIG. 6, the first measurement gap includes a first radio frequency retuning zone 611, a measurement zone 612, and a second radio frequency retuning zone 613, and the MGL may be 4ms. The second measurement gap includes a first VIL 621, an ML 622, and a second VIL 623. The time domain resources of the MGL of the first measurement gap overlap with the time domain resources of the ML 622 in the second measurement gap, or the time domain resources of the MGL of the first measurement gap completely overlap with the time domain resources of the ML 622 in the second measurement gap (as shown by the dotted line in FIG. 6). The first VIL 621 and the second VIL 623 in the second measurement gap do not overlap with the measurement zone 612 of the first measurement gap. In this case, the both the two radio frequency retunings in the first measurement gap will interfere with the measurement during the second measurement gap, so whether the user equipment capability supports the first capability will affect the actual measurement process.

In some possible implementations, performing measurement using at least one of the first measurement gap and the second measurement gap according to the capability of the user equipment in step S202 includes the following steps S202-11:
Step S202-11: when the user equipment capability is supporting the first capability, use the second measurement gap to perform measurement.

In combination with the overlapping scenario shown in FIG. 5 or FIG. 6, in this case, the measurement of the user equipment 101 in the second measurement gap is interfered by the radio frequency retuning, so if the user equipment capability is to support the first capability, it can use the second measurement gap to perform measurement.

In some possible implementations, performing measurement using at least one of the first measurement gap and the second measurement gap according to the capability of the user equipment in step S202 includes the following steps S202-12:
Step S202-12: when the user equipment capability is not supporting the first capability, use the first measurement gap to perform measurement.

In combination with the overlapping scenario shown in FIG. 5 or FIG. 6, in this case, the measurement of the user equipment 101 in the second measurement gap is interfered by the RF retuning. If the user equipment capability is not supporting the first capability, the user equipment 101 will not be able to use the second measurement gap to perform measurement, but can only use the first measurement gap to perform measurement.

In some possible implementations, performing measurement using at least one of the first measurement gap information and the second measurement gap according to the user equipment capability in step S202 includes the following steps S202-13:
Step S202-13: when the user equipment capability is supporting both the first capability and the second capability, the first carrier configured by the measurement configuration information is measured using the first measurement gap, and the second carrier configured by the measurement configuration information is measured using the second measurement gap.

In combination with the overlapping scenario shown in FIG. 5 or FIG. 6, in this case, the measurement of the user equipment 101 in the second measurement gap is interfered by the RF retuning. If the user equipment capability is to support the first capability and the second capability, it indicates that the user equipment 101 can both handle the interference and simultaneously receive and measure the reference signals of multiple carriers to be measured during the measurement gap. Therefore, the user equipment 101 can use the first measurement gap and the second measurement gap to perform corresponding measurements respectively.

To further understand the overlapping scenario shown in FIG. 5 or FIG. 6, a specific example is given below.

### Example 1:

The network device 102 configures the first measurement gap and the second measurement gap through the RRC signaling IE MeasGapConfig, wherein the first measurement gap is a contention gap or a pre-configured gap, and the second measurement gap is an NCSG. In this configuration, the first measurement gap is also configured to measure the neighboring cells corresponding to the carriers CC 1 to CC 4, and the second measurement gap is used to measure the neighboring cells corresponding to the carriers CC 5 to CC 8.

It should be noted that each neighboring cell corresponds to one carrier, but there can be at most 4 neighboring cells on each carrier CC. Therefore, taking the first measurement gap as an example, the meaning of the first measurement gap being used to measure the neighboring cells corresponding to carriers CC 1 to CC 4 is described: for example, there are 4 neighboring cells on CC 1, 4 neighboring cells on CC 2, etc., then the first measurement gap can be applied to the measurement of 16 cells corresponding to CC 1 to CC 4. In the nth measurement, the user equipment 101 can use the first measurement gap to measure the 4 neighboring cells on CC 1 at the same time; in the (n+1)-th measurement, the user equipment 101 can use the first measurement gap to measure the 4 neighboring cells on CC 2 at the same time; in the (n+2)-th measurement, the user equipment 101 can use the first measurement gap to measure the 4 neighboring cells on CC 3 at the same time; in the (n+3)-th measurement, the user equipment 101 can use the first measurement gap to measure the 4 neighboring cells on CC 4 at the same time.

When the first measurement gap and the second measurement gap overlap as shown in FIG. 5 or FIG. 6, the RF retuning in the first measurement gap will interfere with the measurement during the second measurement gap. At this time, the user equipment 101 can perform different operations based on its own capabilities, for example:
If the user equipment capability is to support the first capability, the user equipment 101 may perform neighbor cell measurement corresponding to any carrier of CC 5 to CC 8 during the ML period of the second measurement gap.
If the user equipment capability is not to support the first capability, the user equipment 101 is interfered during the ML period of the second measurement gap and cannot perform normal measurement; therefore, the user equipment 101 performs neighbor cell measurement corresponding to any carrier of carriers CC 1 to CC 4 in the first measurement gap.
If the user equipment capability is to support the first capability and the second capability, the user equipment 101 performs neighbor cell measurement corresponding to any carrier of carriers CC 1 to CC 4 in the first measurement gap, and performs neighbor cell measurement corresponding to any carrier of carriers CC 5 to CC 8 in the second measurement gap.

In some possible implementations, the time domain resources of the first measurement gap overlapping with time domain resources of the second measurement gap, includes: at least one time domain resource of the measurement zone in the first measurement gap overlaps with the time domain resource of the measurement zone in the second measurement gap.

In this case, when the UE retunes the radio frequency in the first measurement gap, it will not interfere with the measurement during the second measurement gap, and the radio frequency retuning during the second measurement gap will not interfere with the measurement during the first measurement gap. However, whether the user equipment can support the second capability, that is, whether it can simultaneously receive and measure different neighboring cell signals during the measurement gap, will affect the actual measurement process.

Still taking the first measurement gap as a concurrent measurement gap or a preconfigured measurement gap and the second measurement gap as an NCSG as an example for explanation, see the description of FIG. 7 below, wherein the VIL of the NCSG is regarded as the RF retuning zone of the NCSG, and the ML of the NCSG is regarded as the measurement zone of the NCSG.

FIG. 7 is a schematic diagram of a second overlapping scenario according to an exemplary embodiment of the present disclosure. As shown in FIG. 7, the first measurement gap includes a first RF retuning zone 711, a measurement zone 712 and a second RF retuning zone 713, and the MGL may be 6 ms. The second measurement gap includes a first VIL 721, an ML 722 and a second VIL 723, and the ML 722 may be 5 ms. In FIG. 7, the time domain resources of the measurement zone 712 of the first measurement gap completely overlap with the time domain resources of the ML 722 of the second measurement gap. At this time, the RF retuning within the two measurement gaps will not interfere with the other party, so there is no need to examine whether the user equipment capability supports the first capability, and whether the user equipment capability supports the second capability will affect the actual measurement process.

In some possible implementations, performing measurement using at least one of the first measurement gap information and the second measurement gap according to the user equipment capability in step S202 includes the following steps S202-21:
Step S202-21: when the user equipment capability is to support the second capability, the first carrier configured by the measurement configuration information is measured using the first measurement gap, and the second carrier configured by the measurement configuration information is measured using the second measurement gap.

In conjunction with the overlapping scenario shown in FIG. 7, when the user equipment 101 supports the second capability, the reference signals of multiple carriers to be measured can be simultaneously received and measured during the measurement gap, so the user equipment 101 can respectively use the first measurement gap and the second measurement gap to perform corresponding measurements.

In some possible implementations, performing measurement using at least one of the first measurement gap and the second measurement gap according to the user equipment capability in step S202 includes the following steps S202-22:
Step S202-22: when the user equipment capability does not support the second capability, use the first measurement gap or the second measurement gap with a higher priority to perform measurement.

In an example, the measurement configuration information sent by the network device 102 further includes priority identifiers of two measurement gaps, so the user equipment 101 can obtain the measurement gap with a higher priority between the two.

In conjunction with the overlapping scenario shown in FIG. 7, when the user equipment 101 does not support the second capability, it can only simultaneously receive and measure the reference signal of the same carrier to be measured during the measurement gap. In this case, the user equipment 101 uses the first measurement gap and the second measurement gap with a higher priority to perform the measurement of the corresponding carrier to be measured.

To further understand the overlapping scenario shown in FIG. 7, a specific example is given below.

### Example 2:

The network device 102 configures the first measurement gap and the second measurement gap through the RRC signaling IE MeasGapConfig, wherein the first measurement gap is a contention gap or a pre-configured gap, and the second measurement gap is an NCSG. In this configuration, the first measurement gap is also configured to measure the neighboring cells corresponding to the carriers CC 1 to CC 4, and the second measurement gap is used to measure the neighboring cells corresponding to the carriers CC 5 to CC 8.

When the first measurement gap and the second measurement gap overlap as shown in FIG. 7, the RF retuning in the two measurement gaps will not interfere with the other party. In this case, the user equipment 101 can perform different operations based on its own capabilities, for example:
If the user equipment capability is to support the second capability, the user equipment 101 performs neighbor cell measurement corresponding to any carrier of carriers CC 1 to CC 4 in the first measurement gap, and performs neighbor cell measurement corresponding to any carrier of carriers CC 5 to CC 8 in the second measurement gap.
If the user equipment capability is not to support the second capability, the user equipment 101 determines a measurement gap with a high priority, such as the first measurement gap, according to the priority identifier in the measurement configuration information. The user equipment 101 performs neighbor cell measurement corresponding to any carrier of carriers CC 1 to CC 4 in the first measurement gap, and does not use the second measurement gap to perform measurement.

In some possible implementations, the time domain resources of the first measurement gap overlapping with the time domain resources of the second measurement gap, includes: the time domain resources of the RF retuning zone in the first measurement gap overlap with the time domain resources of the measurement zone in the second measurement gap, and the time domain resources of the measurement zone in the first measurement gap overlap with the time domain resources of the RF retuning zone in the second measurement gap.

In this case, the radio frequency retuning of the UE in either measurement gap will interfere with the measurement in the other measurement gap, and the two measurement zones may also partially overlap. Therefore, whether the user equipment capability supports the first capability and whether it supports the second capability may affect the actual measurement process.

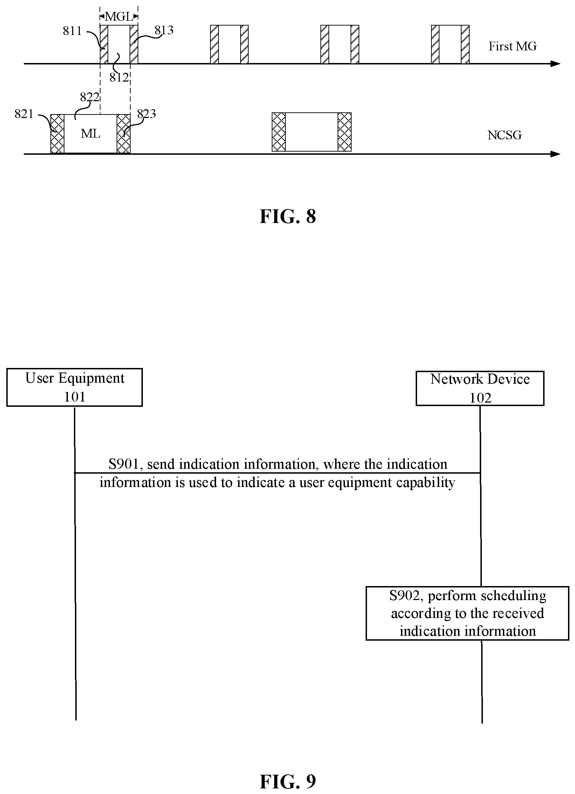

Still taking the first measurement gap as a concurrent measurement gap or a preconfigured measurement gap and the second measurement gap as an NCSG as an example for explanation, see the description of FIG. 8 below, wherein the VIL of the NCSG is regarded as the RF retuning zone of the NCSG, and the ML of the NCSG is regarded as the measurement zone of the NCSG.

FIG. 8 is a schematic diagram of a third overlapping scenario according to an exemplary embodiment of the present disclosure. As shown in FIG. 8, the first measurement gap includes a first RF retuning zone 811, a measurement zone 812 and a second RF retuning zone 813, and the MGL may be 4 ms. The second measurement gap includes a first VIL 821, a ML 822 and a second VIL 823, and the ML 822 may be 5 ms.

The time domain resources of the first RF retuning zone 811 of the first measurement gap overlap with the time domain resources of the ML 822 of the second measurement gap, and the time domain resources of the second VIL 823 of the second measurement gap also overlap with the measurement zone 812 of the first measurement gap. In this case, the RF retuning in the two measurement gaps not only interferes with each other, but also has the problem of whether different carriers to be measured can be measured simultaneously.

In some possible implementations, performing measurement using at least one of the first measurement gap and the second measurement gap according to the capability of the user equipment in step S202 includes the following steps S202-31:
Step S202-31: when the user equipment capability is to support the first capability, perform measurement using the first measurement gap and the second measurement gap with a higher priority.

In combination with the overlapping scenario shown in FIG. 8, when the user equipment 101 supports the first capability but does not support the second capability, that is, the UE can handle the interference caused by the RF retuning during the measurement gap, but cannot simultaneously receive and measure the reference signals of multiple carriers to be measured, the user equipment 101 can use the first measurement gap and the second measurement gap with a higher priority to perform the corresponding measurement.

In some possible implementations, performing measurement using at least one of the first measurement gap and the second measurement gap according to the user equipment capability in step S202 includes the following steps S202-32:
Step S202-32: when the user equipment capability is to support the second capability, use the first measurement gap and the second measurement gap with a higher priority to perform measurement.

In combination with the overlapping scenario shown in FIG. 8, when the user equipment 101 supports the second capability but does not support the first capability, that is, the UE can simultaneously receive and measure the reference signals of multiple carriers to be measured during the measurement gap, but cannot handle the interference caused by the RF retuning, the user equipment 101 can use the first measurement gap and the second measurement gap with a higher priority to perform the corresponding measurement.

In some possible implementations, performing measurement using at least one of the first measurement gap and the second measurement gap according to the user equipment capability in step S202 includes the following steps S202-33:

Step S202-33: when the user equipment capability is to support the first capability and the second capability, the first carrier configured by the measurement configuration information is measured using the first measurement gap, and the second carrier configured by the measurement configuration information is measured using the second measurement gap.

In combination with the overlapping scenario shown in FIG. 8, when the user equipment 101 supports the first capability and the second capability, that is, the UE can handle the interference caused by the RF retuning during the measurement gap, and can simultaneously receive and measure the reference signals of multiple carriers to be measured, the user equipment 101 can use the first measurement gap and the second measurement gap to perform corresponding measurements respectively.

To further understand the overlapping scenario shown in FIG. 8, a specific example is given below.

### Example 3:

The network device 102 configures the first measurement gap and the second measurement gap through the RRC signaling IE MeasGapConfig, wherein the first measurement gap is a contention gap or a pre-configured gap, and the second measurement gap is an NCSG. In this configuration, the first measurement gap is also configured to measure the neighboring cells corresponding to the carriers CC 1 to CC 4, and the second measurement gap is used to measure the neighboring cells corresponding to the carriers CC 5 to CC 8.

When the first measurement gap and the second measurement gap overlap as shown in FIG. 8, the RF retuning in the two measurement gaps not only interferes with each other, but also has the problem of whether different carriers to be measured can be measured simultaneously. At this time, the user equipment 101 can perform different operations based on its own capabilities, for example:

If the user equipment capability is to support only the first capability, the user equipment 101 determines a measurement gap with higher priority, such as the first measurement gap, according to the priority identifier in the measurement configuration information. The user equipment 101 performs neighbor cell measurement corresponding to any carrier of carriers CC 1 to CC 4 in the first measurement gap, and does not use the second measurement gap to perform measurement.

If the user equipment capability is to support only the second capability, the user equipment 101 determines a measurement gap with higher priority, such as the second measurement gap, according to the priority identifier in the measurement configuration information. The user equipment 101 performs neighbor cell measurement corresponding to any carrier of carriers CC 5 to CC 8 in the second measurement gap, and does not use the first measurement gap to perform measurement.

If the user equipment capability is to support the first capability and the second capability, the user equipment 101 performs neighbor cell measurement corresponding to any carrier of carriers CC 1 to CC 4 in the first measurement gap, and performs neighbor cell measurement corresponding to any carrier of carriers CC 5 to CC 8 in the second measurement gap.

The embodiment of the present disclosure provides a method for sending and receiving capability information. FIG. 9 is a flow chart of a method for sending and receiving capability information according to an exemplary embodiment. As shown in FIG. 9, the method includes steps S901 to S902. Specifically:
Step S901: The user equipment 101 sends indication information to the network equipment 102, where the indication information is used to indicate a user equipment capability.

In some possible implementations, the user equipment 101 reports capability information to the network device 102 through RRC signaling, and the capability information is used to carry the indication information.

In some possible implementations, the first capability is: when the time domain resources of the measurement gaps overlap each other, the user equipment 101 is able to overcome the interference caused by the radio frequency retuning. The second capability is: when the time domain resources of the measurement gaps overlap each other, the user equipment 101 is able to simultaneously receive the reference signals of at least two cells to be measured. The SCSs of at least two cells to be measured are the same or different.

In one example, the user equipment capability is to support only the first capability, that is, the user equipment 101 can process the interference caused by the radio frequency retuning during the measurement gap, but cannot simultaneously receive the reference signals of at least two cells to be measured during the measurement gap.

In an example, the user equipment capability is to support only the second capability, that is, the user equipment 101 can simultaneously receive reference signals of at least two cells to be measured during the measurement gap, but cannot process interference caused by radio frequency retuning during the measurement gap.

In an example, the user equipment capability is to support the first capability and the second capability, that is, the user equipment 101 can process interference caused by radio frequency retuning during the measurement gap, and can simultaneously receive reference signals of at least two cells to be measured during the measurement gap.

In one example, the user equipment capability is to support neither the first capability nor the second capability, that is, the user equipment 101 can neither process the interference caused by the radio frequency retuning during the measurement gap, nor simultaneously receive the reference signals of at least two cells to be measured during the measurement gap.

Step S902: the network device 102 performs scheduling according to the received indication information.

In some possible implementations, the network device 102 obtains the user equipment capability according to the indication information reported by the user equipment 101.

In some possible implementations, in a scenario where time domain resources of measurement gaps overlap, if the user equipment capability indicates that only one measurement gap can be used to perform measurement, this will affect the measurement delay of another measurement gap, and the network device 102 may extend the measurement delay requirement for the other measurement gap.

In an example, in the overlapping scenario of FIG. 5 or FIG. 6, when the user equipment capability is to support the first capability, the UE uses the second measurement gap to perform measurement. In this case, the network device 102 may extend the measurement delay requirement for the first measurement gap.

In one example, in the overlapping scenario of FIG. 5 or FIG. 6, when the user equipment capability is not to support the first capability, the UE uses the first measurement gap to perform measurement. In this case, the network device 102 may extend the measurement delay requirement for the second measurement gap.

In some possible implementations, in a scenario where time domain resources of measurement gaps overlap, if the user equipment capability indicates that two measurement gaps can be used to perform measurements, the measurements of the two measurement gaps are not affected, so the network device 102 may not adjust the measurement delay requirement.

In some possible implementations, in combination with different measurement objects of the first measurement gap and the second measurement gap, for example, the first measurement gap is configured for intra-frequency measurement, and the second measurement gap is configured for inter-frequency measurement. If the user equipment capability is to support the second capability, the network device 102 can perform normal measurement scheduling; if the user equipment capability is not to support the second capability, the network device 102 cannot complete the measurement scheduling because the first measurement gap or the second measurement gap may be dropped.

Based on the same concept as the above method embodiment, the embodiment of the present disclosure further provides a user equipment 101, which is used to execute the steps performed by the user equipment 101 provided in the above embodiment.

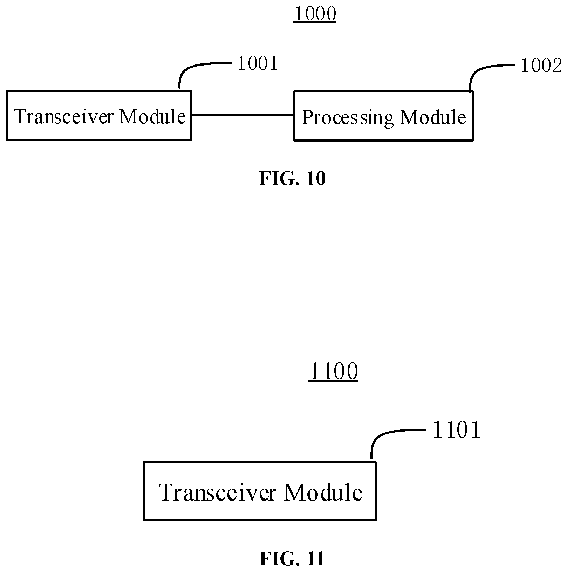

In a possible implementation, the apparatus 1000 shown in FIG. 10 may be used as the user equipment 101 involved in the above method embodiment, and execute the steps executed by the user equipment 101 in the above method embodiment.

The apparatus 1000 includes a transceiver module 1001 and a processing module 1002.

The transceiver module 1001 is configured to receive measurement configuration information sent by a network device, where the measurement configuration information includes a first measurement gap and a second measurement gap. The processing module 1002 is configured to perform measurement using at least one of the first measurement gap and the second measurement gap according to the user equipment capability, where a time domain resource of the first measurement gap overlaps with a time domain resource of the second measurement gap.

The present disclosure also provides a communication device, including a processor and a memory, wherein:
the memory is used to store a computer program; and
the processor is used to execute the computer program to implement the method performed by the user equipment 101.

The embodiment of the present disclosure further provides a computer-readable storage medium, wherein the computer-readable storage medium stores instructions, and when the instructions are called and executed on a computer, the computer is caused to execute the method executed by the user device.

Based on the same concept as the above method embodiment, the embodiment of the present disclosure further provides a network device 102 for executing the steps performed by the network device 102 provided in the above embodiment.

In a possible implementation, the apparatus 1100 shown in FIG. 11 may be used as the network device 102 involved in the above method embodiment, and execute the steps executed by the network device 102 in the above method embodiment.

The apparatus 1100 includes a transceiver module 1101.

The transceiver module 1101 is configured to send measurement gap configuration information to the user equipment, where the measurement configuration information includes a first measurement gap and a second measurement gap.

The present disclosure also provides a communication device, including a processor and a memory, wherein:
the memory is used to store computer a program; and
the processor is used to execute the computer program to implement the method performed by the network device 102.

The embodiment of the present disclosure further provides a computer-readable storage medium, in which instructions are stored. When the instructions are called and executed on a computer, the computer is caused to execute the method executed by the network device 102.

Those skilled in the art will readily appreciate other implementations of the disclosed embodiments after considering the specification and practicing the invention disclosed herein. This application is intended to cover any variations, uses, or adaptations of the disclosed embodiments, which follow the general principles of the disclosed embodiments and include common knowledge or customary technical means in the art that are not disclosed in the present disclosure. The specification and examples are to be considered as exemplary only, and the true scope and spirit of the disclosed embodiments are indicated by the following claims.

It should be understood that the embodiments of the present disclosure are not limited to the precise structures described above and shown in the drawings, and various modifications and changes may be made without departing from the scope thereof. The scope of the embodiments of the present disclosure is limited only by the appended claims.

### INDUSTRIAL APPLICABILITY

In the method disclosed herein, when there is a conflict in the time domain resources of multiple measurement gaps configured by the network device for the user equipment, the user equipment can perform adaptive processing based on its own capabilities and use one or more measurement gaps for measurement to achieve effective measurement in the scenario of this measurement gap conflict.

## Claims

1. A method for receiving measurement configuration information, performed by a user equipment, the method comprising:
receiving measurement configuration information sent by a network device, wherein the measurement configuration information comprises a first measurement gap and a second measurement gap; and
performing measurement using at least one of the first measurement gap and the second measurement gap according to a user equipment capability, wherein a time domain resource of the first measurement gap is overlapped with a time domain resource of the second measurement gap.

2. The method according to claim 1, wherein the time domain resource of the first measurement gap being overlapped with the time domain resource of the second measurement gap, comprising:
a time domain resource of a radio frequency retuning zone in the first measurement gap is overlapped with a time domain resource of a measurement zone in the second measurement gap, and a time domain resource of a measurement zone in the first measurement gap is not overlapped with a time domain resource of a radio frequency retuning zone in the second measurement gap.

3. The method according to claim 2, wherein the performing measurement using at least one of the first measurement gap and the second measurement gap according to the user equipment capability comprises:
performing measurement using the second measurement gap when the user equipment capability comprises supporting a first capability.

4. The method according to claim 2, wherein the performing measurement using at least one of the first measurement gap and the second measurement gap according to the user equipment capability comprises:
performing measurement using the first measurement gap when the user equipment capability comprises not supporting a first capability.

5. The method according to claim 2, wherein the performing measurement using at least one of the first measurement gap information and the second measurement gap according to the user equipment capability comprises:
performing measurement on a first carrier configured by the measurement configuration information using the first measurement gap and performing measurement on a second carrier configured by the measurement configuration information, when the user equipment capability comprises supporting a first capability and a second capability.

6. The method according to claim 1, wherein the time domain resource of the first measurement gap being overlapped with the time domain resource of the second measurement gap, comprising:
at least one time domain resource of a measurement zone in the first measurement gap is overlapped with a time domain resource of a measurement zone in the second measurement gap.

7. The method according to claim 6, wherein the performing measurement using at least one of the first measurement gap information and the second measurement gap according to the user equipment capability comprises:
performing measurement on a first carrier configured by the measurement configuration information using the first measurement gap and performing measurement on a second carrier configured by the measurement configuration information, when the user equipment capability comprises supporting a second capability.

8. The method according to claim 6, wherein the performing measurement using at least one of the first measurement gap and the second measurement gap according to the user equipment capability comprises:
performing measurement using the first measurement gap or the second measurement gap with a higher priority when the user equipment capability comprises not supporting a second capability.

9. The method according to claim 1, wherein the time domain resource of the first measurement gap being overlapped with the time domain resource of the second measurement gap, comprising:
a time domain resource of a radio frequency retuning zone in the first measurement gap is overlapped with a time domain resource of a measurement zone in the second measurement gap, and a time domain resource of a measurement zone in the first measurement gap is overlapped with a time domain resource of a radio frequency retuning zone in the second measurement gap.

10. The method according to claim 9, wherein the performing measurement by using at least one of the first measurement gap and the second measurement gap according to the user equipment capability comprises:
performing measurement using the first measurement gap or the second measurement gap with a higher priority when the user equipment capability comprises supporting a first capability.

11. The method according to claim 9, wherein the performing measurement by using at least one of the first measurement gap and the second measurement gap according to the user equipment capability comprises:
performing measurement using the first measurement gap or the second measurement gap with a higher priority when the user equipment capability comprises supporting a second capability.

12. The method according to claim 9, wherein the performing measurement using at least one of the first measurement gap and the second measurement gap according to the user equipment capability comprises:
performing measurement on a first carrier configured by the measurement configuration information using the first measurement gap and performing measurement on a second carrier configured by the measurement configuration information, when the user equipment capability comprises supporting a first capability and a second capability.

13. The method according to any one of claims 1 to 12, wherein:
the first measurement gap is a concurrent measurement gap or a preconfigured measurement gap, and the second measurement gap is a network-controlled small measurement gap NCSG.

14. The method according to any one of claims 1 to 12, further comprising:
sending indication information to a network device, wherein the indication information is used to indicate the user equipment capability.

15. The method according to any one of claims 1 to 12, wherein:
the measurement configuration information further comprises a priority identifier corresponding to the first measurement gap and a priority identifier corresponding to the second measurement gap.

16. A method for sending measurement configuration information, performed by a network device, the method comprising:
sending measurement gap configuration information to a user equipment, wherein the measurement configuration information comprises a first measurement gap and a second measurement gap.

17. The method according to claim 16, further comprising:
receiving indication information sent by the user equipment, where the indication information is used to indicate a user equipment capability;
wherein the user equipment capability comprises whether supporting a first capability, and/or the user equipment capability comprises whether supporting a second capability.

18. A user equipment, comprising:
a transceiver module, configured to receive measurement configuration information sent by a network device, wherein the measurement configuration information comprises a first measurement gap and a second measurement gap; and
a processing module, configured to perform measurement using at least one of the first measurement gap and the second measurement gap according to a user equipment capability, wherein a time domain resource of the first measurement gap is overlapped with a time domain resource of the second measurement gap.

19. A network device comprising:
a transceiver module, configured to send measurement gap configuration information to a user equipment, wherein the measurement configuration information comprises a first measurement gap and a second measurement gap.

20. A communication apparatus, comprising a processor and a memory, wherein:
the memory is configured to store a computer program; and
the processor is configured to execute the computer program to implement the method according to any one of claims 1 to 15.

21. A communication apparatus, comprising a processor and a memory, wherein:
the memory is configured to store a computer program; and
the processor is configured to execute the computer program to implement the method according to any one of claims 16 to 17.

22. A computer-readable storage medium, wherein instructions are stored in the computer-readable storage medium, and when the instructions are called and executed on a computer, the execution causes the computer to execute the method according to any one of claims 1 to 15.

23. A computer-readable storage medium, wherein instructions are stored in the computer-readable storage medium, and when the instructions are called and executed on a computer, the execution causes the computer to execute the method according to any one of claims 16 to 17.

24. A communication system, comprising a user equipment configured to execute the method according to any one of claims 1-15 and a network device configured to execute the method according to any one of claims 16-17.
